# FASCICULE DE BREVET EUROPEEN

(11) **EP 2 719 040 B1**
(45) Date de publication et mention de la délivrance du brevet: **08.04.2015**
(21) Numéro de dépôt: 12731536.4
(22) Date de dépôt: 06.06.2012
(51) Int. Cl.: H02G 3/04, H02G 3/06, F16B 7/04

(54) **ACCESSOIRE D'ANGLE POUR CHEMINS DE CABLES EN FILS**
WINKELANSCHLUSSTEIL FÜR EINEN DRAHTKABELKANAL
ANGLE ACCESSORY FOR WIRE-TYPE CABLE TRAY

(30) Priorité: 07.06.2011 FR 1101729
(43) Date de publication de la demande: 16.04.2014
(73) Titulaire: Legrand France, 87000 Limoges (FR); Legrand SNC, 87000 Limoges (FR)
(72) Inventeur: GREVECHE, Cécile, F-53600 Châtres La Forêt (FR); BELLANGER, Jérôme, F-72650 Saint Saturnin (FR); ADAM, Damien, F-72240 Domfront en Champagne (FR); DECORE, Raphaël, F-72140 Sille le Guillaume (FR)
(74) Mandataire: Santarelli
(86) Numéro de dépôt international: PCT/FR2012/051269
(87) Numéro de publication internationale: WO 2012/168655

(56) Documents cités:
- EP-A1- 1 195 870
- WO-A1-03/049247
- DE-A1- 19 747 887
- FR-A1- 2 858 129
- FR-A1- 2 941 821
- FR-A1- 2 947 676
- JP-U- 54 006 092

## Description

La présente invention concerne un accessoire d'angle pour chemins de câbles en fils.

De manière connue, des chemins de câbles en fils se présentent sous la forme d'un canal constitué d'un maillage de fils. Ce maillage comporte, d'une part, des fils longitudinaux, appelés également fils de chaînes et, d'autre part, des fils transversaux appelés également fils de trame. Les fils de chaînes sont des fils rectilignes, ou sensiblement rectilignes, et sont soudés aux fils de trame qui présentent généralement une forme en U. Les fils de trame sont disposés avec un pas régulier le long des fils de chaînes. Ainsi, un chemin de câbles comporte globalement trois panneaux, à savoir un panneau de fond et deux panneaux latéraux. De tels chemins de câbles sont couramment utilisés pour assurer le logement, le soutien et la protection de conduites souples de diverses natures : conduites électriques (basse tension ou haute tension), câbles de transmission de données (téléphone, fibre optique, etc.), conduites fluides, ....

Les chemins de câbles en fils sont réalisés par assemblage d'une succession de tronçons de chemins de câbles. Comme le sait l'homme du métier, ces chemins de câbles peuvent avoir un parcours rectiligne mais également effectuer des virages, changer d'altitude, etc..

Lorsqu'un chemin de câbles doit réaliser un coude, il est connu de réaliser une découpe des fils de chaînes entre deux fils de trame successifs au niveau du fond du chemin de câbles et d'un bord latéral de celui-ci. Le tronçon de chemin de câbles correspondant est alors plié en venant déformer les fils de chaîne restant de l'autre bord latéral. Pour maintenir le tronçon de chemin de câbles dans sa configuration pliée, il convient d'utiliser des accessoires, appelés également accessoires d'angle. Ces derniers sont utilisés pour maintenir rapprochées deux branches de fils de trame correspondant au bord latéral dans lequel les fils de chaîne ont été coupés.

Un tel accessoire d'angle est par exemple divulgué par le document FR-2 858 129. L'accessoire d'angle illustré dans ce document présente une âme prolongée à ses deux extrémités par des pattes rabattables formées d'une seule pièce avec l'âme. L'accessoire est alors disposé sur le tronçon de chemin de câbles alors que les pattes rabattables sont uniquement partiellement rabattues. Une fois l'accessoire positionné, les pattes rabattables sont entièrement rabattues et un système vis-écrou est utilisé pour maintenir les pattes rabattues et ainsi maintenir l'accessoire d'angle sur le tronçon de chemin de câbles.

Un tel accessoire présente l'inconvénient d'être tout d'abord réalisé en plusieurs pièces (l'âme portant les pattes rabattables, la vis et l'écrou). Sa mise en oeuvre en plusieurs étapes implique un temps de montage relativement long. Enfin, la présence d'une tête de vis à l'intérieur du tronçon de chemin de câbles est agressive pour les câbles se trouvant à l'intérieur de celui-ci, notamment lors du tirage des câbles dans le chemin de câbles.

Le document WQ-03/049247 illustre une éclisse pouvant également être utilisée comme accessoire d'angle. Le dispositif décrit comprend un corps en forme de U ayant deux ailes et une âme. Chacune des ailes comporte au moins deux échancrures à bords parallèles, les échancrures d'une aile faisant face aux échancrures de l'autre aile. Au moins un bord d'une échancrure d'une paire d'échancrures se faisant face porte une patte de verrouillage. Lorsque cette éclisse est utilisée comme accessoire d'angle, les branches de deux fils de trame voisins sont introduites dans des échancrures et les pattes de verrouillage sont pliées de manière à venir enfermer les fils de trame correspondant dans le fond de l'échancrure.

Par rapport au dispositif précédent, le montage est plus aisé, plus rapide et l'accessoire d'angle ainsi réalisé n'est pas agressif pour les câbles se trouvant à l'intérieur du chemin de câbles.

La présente invention a alors pour but d'améliorer encore l'ergonomie d'un accessoire d'angle tel ceux décrits dans le document WO-03/049247, ainsi que de proposer un dispositif amélioré par rapport à ceux connus des documents FR 2 941 821 et FR 2 947 676.

Un objectif de la présente invention est de faciliter le montage de l'accessoire sur le tronçon de chemin de câbles plié.

Avantageusement, le nouvel accessoire d'angle permettra une meilleure protection encore des câbles vis-à-vis d'arêtes coupantes que l'on peut éventuellement trouver au niveau du tronçon de chemin de câbles plié.

En outre, le dispositif selon la présente invention permettra également de protéger un installateur vis-à-vis d'arêtes éventuellement coupantes se trouvant au niveau du tronçon de chemin de câbles plié.

Enfin, l'utilisation d'un accessoire d'angle selon la présente invention favorisera de préférence l'alignement des deux parties du tronçon de chemin de câbles relié par ledit accessoire.

La présente invention propose alors un accessoire d'angle se présentant sous la forme d'un dispositif de liaison pour deux fils transversaux de chemin de câbles en fils présentant des fils longitudinaux et des fils transversaux, ledit dispositif de liaison comportant :
- un fond sensiblement plan présentant une face avant, une face arrière, un premier bord et un deuxième bord parallèle au premier bord,
- un premier rebord incurvé s'étendant à partir du premier bord du fond vers l'avant de celui-ci, et
- un deuxième rebord incurvé s'étendant à partir du second bord du fond vers l'avant de celui-ci,
le premier rebord et le second rebord étant incurvés l'un vers l'autre de telle sorte que le premier rebord, le second rebord et la partie du fond disposée entre les deux rebords présentent au moins localement une forme profilée en C, chaque rebord définissant un logement destiné à recevoir un fil transversal.

Selon la présente invention, le premier rebord et le second rebord présentent chacun une partie en forme de goulotte ainsi qu'une bande d'extrémité incurvée dont la concavité est orientée vers le fond, une arête séparant la goulotte de la bande d'extrémité dont le rayon de courbure est sensiblement égal au rayon de courbure de la goulotte.

Avec un tel dispositif de liaison, lors de son montage, un fil de trame peut ainsi venir temporairement se loger contre la bande d'extrémité avant d'être introduit par la suite dans la goulotte. Cette caractéristique permet de réaliser un prémontage de l'accessoire d'angle sur un tronçon de chemin de câbles. Un monteur peut alors préparer le pliage d'un tronçon de chemin de câbles et faire d'éventuelles modifications avant de valider son travail en faisant alors passer les accessoires d'angle de leur position de prémontage (fils de trame reposant contre les bandes d'extrémité) à la position de montage (fils de trame reposant au fond des goulottes).

Dans une forme de réalisation préférée, le fond de l'accessoire d'angle présente une découpe sur trois côtés dont deux sont parallèles au premier bord et au second bord définissant ainsi une languette, et la languette est repliée vers l'avant du fond en formant avec celui-ci un angle aigu, le pliage étant réalisé par rapport à un quatrième côté qui est parallèle au troisième bord du fond. Une telle languette permet de réaliser un verrouillage d'un fil de trame au fond d'un rebord. Il convient de dimensionner cette languette de telle sorte qu'elle vienne former avec le premier rebord et le deuxième rebord à chaque fois un passage de largeur inférieur au diamètre d'un fil de trame. En essayant de faire rentrer un fil de trame au fond du premier ou du deuxième rebord, le fil de trame vient appuyer sur la languette de manière à la rétracter vers le fond permettant ainsi l'accès au fond du rebord correspondant. Par contre, l'appui n'est plus réalisé si on tente de ressortir le fil de trame de son logement contre le rebord si bien que le montage du fil de trame est ainsi verrouillé. Dans cette forme de réalisation préférée, la distance séparant un bord latéral de la languette, adjacent au quatrième côté de pliage, du fond du rebord lui faisant face est avantageusement de 5 ± 0,2 mm car les fils de trame d'un chemin de câbles présentent pour la plupart un diamètre de 5 mm. Afin de toutefois autoriser le démontage d'un accessoire d'angle selon la présente invention, une fente destinée à recevoir l'extrémité d'un tournevis plat est avantageusement réalisée dans la languette.

Lorsqu'une languette telle que décrite plus haut est également prévue, alors la distance entre l'arête séparant la goulotte de la bande d'extrémité de la languette sera avantageusement inférieure au double du rayon de courbure de la goulotte. Pour s'adapter à des fils d'un diamètre de 5 mm, le rayon de courbure de la goulotte et de la bande d'extrémité sera par exemple de 2,5 ± 0,1 mm.

La présente invention concerne également un tronçon de chemin de câbles comportant des fils longitudinaux soudés à des fils transversaux en forme de U formant ainsi un canal avec un fond disposé entre deux bords latéraux, les fils longitudinaux dudit tronçon de chemin de câbles étant sectionnés entre deux fils transversaux successifs au niveau du fond et d'un premier bord latéral du tronçon de chemin de câbles de manière à permettre le pliage de ce dernier, caractérisé en ce que lesdits deux fils transversaux sont reliés l'un à l'autre par un dispositif de liaison tel que décrit ci-dessus. Pour un tel tronçon de chemin de câbles, on peut également prévoir que la face arrière du fond du dispositif de liaison est orientée vers l'intérieur du tronçon de chemin de câbles.

Des détails et avantages de la présente invention ressortiront mieux de la description qui suit, faite en référence aux dessins schématiques annexés sur lesquels :
Les figures 1A à 1C illustrent un accessoire d'angle selon la présente invention en perspective selon trois angles de vue différents,
La figure 2A est une vue de dessous d'un accessoire d'angle selon la présente invention,
La figure 2B est une vue de face de l'accessoire d'angle de la figure 2A,
La figure 2C est une vue en coupe selon la ligne de coupe C-C de la figure 2B,
La figure 3 illustre en perspective un accessoire d'angle selon la présente invention monté sur un tronçon de chemin de câbles en fils plié,
La figure 4 est une vue de dessus correspondant à la vue de la figure 3,
La figure 5 illustre un tronçon de chemin de câbles mettant en oeuvre quatre accessoires d'angle selon la présente invention,
Les figures 6 et 7 illustrent le montage d'un accessoire d'angle selon la présente invention sur un tronçon de chemin de câbles en fils, les figures 6A et 7A étant des vues explicatives de montage en perspective et les figures 6B et 7B étant des vues en coupe transversale schématique montrant la position de fils de trame par rapport à l'accessoire d'angle représenté.

Les différentes figures illustrent une forme de réalisation préférée d'un accessoire d'angle selon la présente invention. Un tel accessoire d'angle est un dispositif de liaison permettant de relier deux fils transversaux d'un chemin de câbles en fils.

Selon la présente invention, un accessoire d'angle comporte un fond 2 duquel s'étendent un premier rebord 4, un deuxième rebord 6 et un troisième rebord 8. Cet accessoire est par exemple réalisé en acier, notamment en acier galvanisé ou en acier inoxydable. Il peut être réalisé par découpe et pliage d'une tôle correspondante.

Dans la forme de réalisation préférée représentée sur les dessins, le fond 2 présente une forme rectangulaire, éventuellement carrée. Ainsi le fond 2 présente un premier bord 10, un deuxième bord 12 opposé au premier bord et un troisième bord 14 s'étendant transversalement par rapport au premier bord 10 et au deuxième bord 12. Le premier bord 10 et le deuxième bord 12 seront également appelés par la suite bords latéraux tandis que le troisième bord 14 sera également appelé bord supérieur. On suppose ici, ainsi que dans la suite de la présente description, que l'accessoire d'angle est positionné de telle sorte que ses bords latéraux s'étendent verticalement, le bord supérieur, et le bord inférieur qui lui est opposé, étant à l'horizontale.

Le premier bord 10 porte le premier rebord 4, le deuxième bord 12 porte le deuxième rebord 6 et le troisième bord 14 porte le troisième rebord 8. Dans la forme de réalisation préférée représentée, on suppose que l'accessoire d'angle décrit est symétrique par rapport à un plan vertical perpendiculaire au fond 2 (et parallèle au premier bord 10 et au deuxième bord 12). Le deuxième rebord 6 est donc symétrique au premier rebord 4 et seul ce dernier sera donc décrit en détail ci-après.

Le fond 2 présente une face avant et une face arrière. Le premier rebord 4 s'étend à partir du premier bord 10 en étant recourbé et on suppose ici que ce premier rebord 4 s'étend vers l'avant du fond 2. En vue de dessus, le premier rebord 4 forme à partir du premier bord 10 un arc de cercle sur un secteur compris entre 90 et 180°, par exemple environ 135°. Le premier rebord 4 forme ainsi une goulotte 16. Le rayon dudit arc de cercle est tel que le rayon de courbure à l'intérieur de la goulotte est d'environ 2,5 mm. Ainsi, un fil d'un diamètre de 5 mm, ce qui correspond au diamètre des fils habituellement utilisés pour réaliser des fils de trame dans des chemins de câbles, peut loger dans la goulotte 16 en épousant la paroi intérieure de celle-ci.

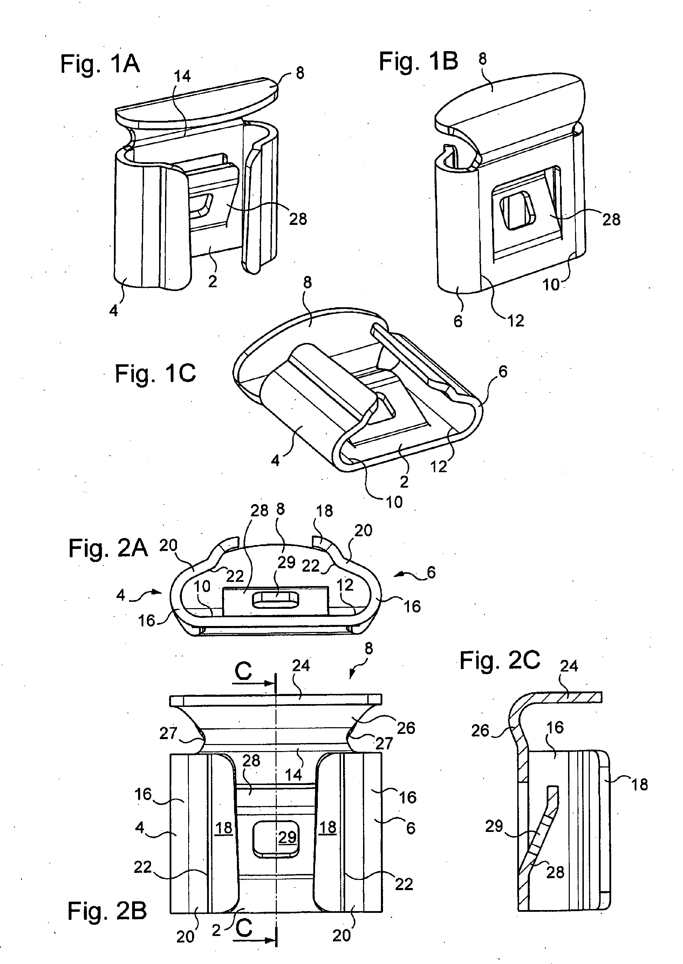

Au-delà de la goulotte 16, le premier rebord 4 présente également une bande d'extrémité 18. Cette dernière s'étend verticalement et forme l'extrémité libre du premier rebord 4. Cette bande d'extrémité 18 est incurvée de manière à présenter elle aussi en vue de dessus une forme d'arc de cercle. Cet arc de cercle s'étend par exemple sur un secteur formant un angle de moins de 90°. Une valeur préférée de cette angle est aux alentours de 60°, dans une plage angulaire entre 50 et 70°. La courbure de la bande d'extrémité 18 correspond sensiblement à celle de la goulotte 16 de telle sorte qu'un fil de trame (par exemple d'un diamètre de 5 mm) puisse venir loger contre la bande d'extrémité 18. La concavité de la bande d'extrémité 18 est orientée vers le fond 2. Cette bande d'extrémité 18 s'étend de préférence sur toute la hauteur de la goulotte 18, qui correspond sensiblement à la hauteur du fond 2. On remarque (par exemple sur la figure 2B) que les bords libres de la bande d'extrémité 18 sont arrondis de manière à être moins agressifs vis-à-vis de l'environnement.

Entre la goulotte 16 et la bande d'extrémité 18, on remarque dans la forme de réalisation représentée sur les figures la présence d'un petit méplat 20 et d'une arête 22.

Le méplat 20 prolonge le bord de la goulotte 16 opposé au fond 2 et est tangent à ce bord de goulotte. Il s'étend sur une longueur (en vue de dessus) de l'ordre du millimètre.

L'arête 22 est formé par un pliage présentant un faible rayon de courbure est dont la concavité est orientée vers l'extérieur de l'accessoire d'angle.

La géométrie de l'ensemble du premier rebord 4, incluant la goulotte 16, le méplat 20, l'arête 22 et la bande d'extrémité 18 est telle que le bord libre de la bande d'extrémité 18 se termine par une portion sensiblement parallèle au fond 2 (ou dont la tangente à l'extrémité est sensiblement parallèle au fond 2).

L'ensemble formé par le premier rebord 4, le fond 2 et le deuxième rebord 6 présente globalement une forme profilée en C comme il ressort notamment de la figure 2A, les branches du C présentant une forme un peu spéciale avec une double concavité (décrite ci-dessus) dans la forme de réalisation préférée de la présente invention. Seuls les angles au niveau de la bande d'extrémité 18 sont légèrement arrondis pour être moins agressifs.

Le troisième bord 14 du fond 2 s'étend horizontalement et porte le troisième rebord 8. Ce dernier a pour but de définir un logement s'étendant à l'horizontale au-dessus du premier rebord 4 et du deuxième rebord 6. Dans la forme de réalisation préférée représentée sur les figures annexées, le troisième rebord 8 présente alors une visière 24 raccordée par une zone de liaison 26 au fond 2.

La visière 24 est une partie plane qui s'étend de préférence à l'horizontale (ou bien avec une faible inclinaison, inférieure à 10°, par rapport à l'horizontale) à distance des bords supérieurs du premier rebord 4 et du deuxième rebord 6. Dans le cas d'une visière 24 parallèle aux bords supérieurs du premier rebord 4 et du deuxième rebord 6, la distance séparant la visière 24 du premier rebord 4 et du deuxième rebord 6 est par exemple comprise entre 5,5 mm et 6,0 mm de manière à pouvoir loger librement un fil d'un diamètre de 5 mm.

La forme de la visière 24 est libre. Elle recouvre de préférence les goulottes 16. Dans la forme de réalisation représentée, elle présente une forme comportant à l'arrière un bord droit et à l'avant un bord arrondi. Le bord arrondi présente un rayon de courbure d'environ 20 mm, ce qui correspond sensiblement à la distance hors tout du premier rebord 4 au second rebord 6. Ce bord avant s'étend jusqu'au dessus des bandes d'extrémité 18 sans les recouvrir entièrement. Il est relié au bord arrière par des bords latéraux incurvés. Toutefois, comme indiqué, la forme de la visière 24 est libre et pourrait être par exemple simplement rectangulaire avec des angles droits, arrondis, chanfreinés, ....

La zone de liaison 26 s'étend tout d'abord vers l'arrière du fond 2 et forme un plan incliné raccordé à la visière 24 par un arrondi. De la sorte, il est possible d'avoir une partie sensiblement plane recouvrant entièrement (ou presque) les goulottes 16. Sur la figure 2B correspondant à la vue de face de l'accessoire d'angle décrit, on remarque que la zone de liaison 26 présente des échancrures 27 constituant un dégagement pour ne pas buter sur le fil de rive, notamment lorsque l'accessoire est amené à faire un angle important avec le fil de rive. Leur forme arrondie permet d'éviter toute amorce de rupture.

On remarque au niveau du fond 2 la présence d'une languette 28. Cette dernière est obtenue par découpe et pliage. La découpe est en forme de U, la base du U étant parallèle au troisième bord 14, et les branches du U étant parallèles au premier bord 10 et au deuxième bord 12. La base du U est positionnée en position basse par rapport aux branches du U (par rapport à l'orientation choisie précédemment et donc les branches du U se trouvent entre la base du U et le troisième bord 14). La languette 28 est alors pliée par rapport à la base du U vers l'intérieur de l'accessoire d'angle, c'est-à-dire vers l'avant du fond 2. Elle présente une forme sensiblement rectangulaire avec des bords horizontaux (dont son bord inférieur par lequel elle est rattachée au fond 2) et des bords latéraux disposés dans un plan vertical.

La languette 28 est inclinée vers l'intérieur de l'accessoire d'angle décrit. Dans la forme de réalisation préférée, l'extrémité libre de la languette 28 est plié par rapport au reste de la languette de manière à s'étendre dans un plan vertical et se retrouver parallèle au fond 2. L'inclinaison du corps de la languette 28 par rapport au fond 2 dépend de la longueur de la languette 28 comme il ressortira de la description qui suit. À l'intérieur de la languette 28, on observe également la présence d'une fente 29 traversante rectangulaire qui peut être utilisée par exemple pour recevoir l'extrémité d'un tournevis.

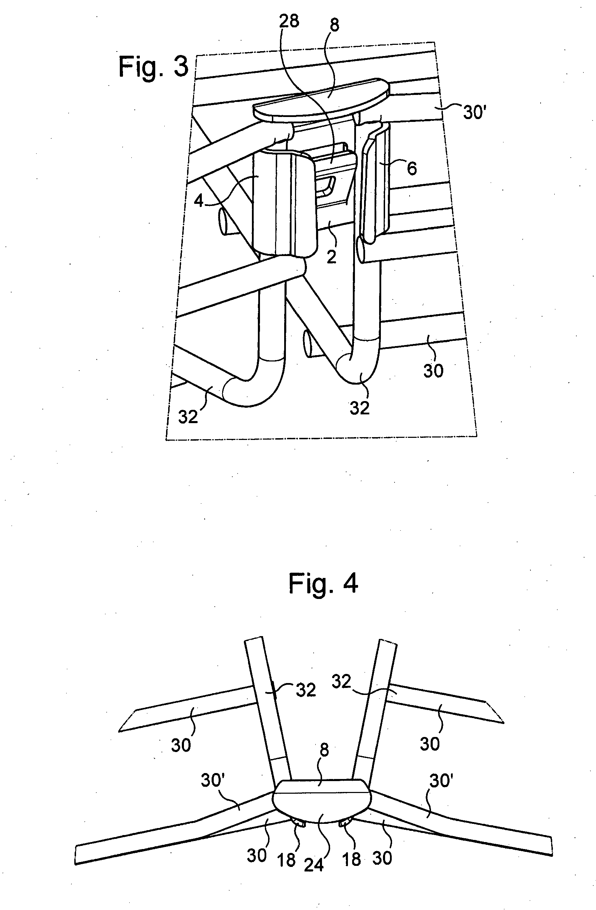

Comme illustré sur les figures 3 à 7, l'accessoire d'angle décrit ici est destiné à coopérer avec un tronçon de chemin de câbles et notamment un tronçon de chemin de câbles formant un virage dans le chemin de câbles correspondant.

De manière classique, le tronçon de chemin de câbles est en forme de canal (ou gouttière) et comporte des fils longitudinaux appelés fils de chaîne 30 et des fils transversaux appelés fils de trame 32. Les fils de chaîne 30 sont des fils rectilignes (sauf les fils de rive dans la forme de réalisation représentée qui sont toutefois sensiblement rectilignes). Les fils de trame 32 sont quant à eux en forme de U. Le tronçon de chemin de câbles présente ainsi un panneau de fond 34 et deux panneaux latéraux 36. On suppose ici que le panneau de fond 34 est en position inférieure par rapport aux panneaux latéraux 36. Ce panneau de fond 34 est disposé dans un plan sensiblement horizontal tandis que les panneaux latéraux 36 s'étendent sensiblement verticalement. Une telle orientation est habituelle pour un tronçon de chemin de câbles et correspond à l'orientation choisie plus haut pour l'accessoire d'angle. Toutefois, d'autres orientations peuvent être envisagées, avec par exemple le panneau de fond 34 disposé verticalement ou incliné.

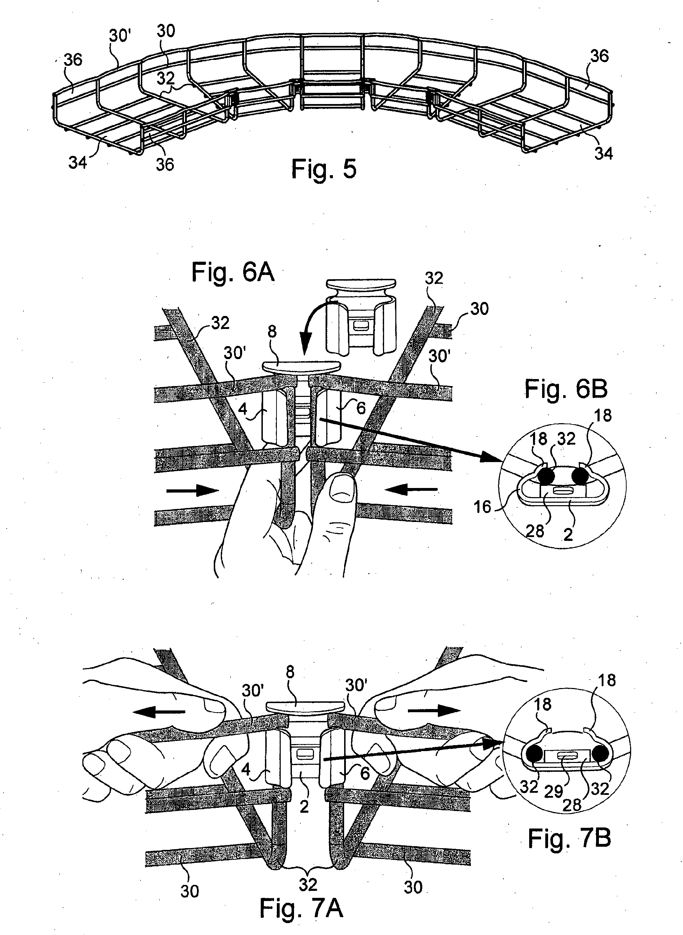

Dans la forme de réalisation de la figure 5, le tronçon de chemin de câbles représenté est plié de telle sorte que son panneau de fond reste dans un même plan horizontal mais ses panneaux latéraux 36 présentent chacun une forme incurvée. Pour obtenir cette forme incurvée, comme il est connu de l'homme du métier, des tronçons de fils de chaîne 30 sont coupés entre deux fils de trame 32 successifs au niveau du panneau de fond 34 et du panneau latéral 36 se trouvant du côté concave de la courbure faite par le tronçon de chemin de câbles. Un accessoire d'angle est alors utilisé pour maintenir deux fils de trame 32 voisins sur ce panneau latéral 36 se trouvant du côté concave de la courbure faite par le tronçon de chemin de câbles. Les dimensions de l'accessoire d'angle sont donc bien entendu adaptées à celles du tronçon de chemin de câbles et plus particulièrement à celles des fils utilisés pour réaliser le tronçon de chemin de câbles.

L'accessoire d'angle tel que décrit plus haut est prévu pour être monté entre deux fils de trame 32 au niveau du fil de rive 30' du tronçon de chemin de câbles comme illustré sur les figures 3 à 7. L'accessoire est donc plus particulièrement adapté aux dimensions (diamètre) des fils de trame 32 et du fil de rive 30' correspondant. À titre jurement illustratif et non limitatif, comme déjà évoqué plus haut, on suppose que ces fils, tant les fils de trame 32 que le fil de rive 30', présentent chacun un diamètre de 5 mm, bien entendu aux tolérances de fabrication près. Ce diamètre est couramment utilisé pour ces fils dans la fabrication de chemins de câbles en fils.

Comme déjà indiqué, la courbure des goulottes 16 et des bandes d'extrémité 18 est adaptée, à l'intérieur de l'accessoire d'angle, au diamètre extérieur des fils de trame 32. Plusieurs autres dimensions dans l'accessoire d'angle sont choisies avantageusement en fonction du diamètre (5 mm à titre d'exemple numérique) des fils de trame 32 et du fil de rive 30'.

La distance séparant les bords libres verticaux des bandes d'extrémité 18 est ainsi par exemple avantageusement supérieure au diamètre d'un fil de trame 32 mais inférieure au double de ce diamètre. Ceci impose alors à l'utilisateur d'introduire un fil de trame 32 après l'autre dans l'accessoire d'angle mais d'un autre côté, ceci empêche le retrait simultané des fils de trame 32 introduits dans l'accessoire d'angle.

La distance séparant la languette 28 d'une arête 22 est inférieure au diamètre d'un fil de trame 32 de telle sorte qu'un fil de trame 32 puisse être prisonnier à l'intérieur d'une goulotte 16. Pour l'introduction d'un fil de trame dans la goulotte 16, il conviendra de déformer élastiquement à la fois le premier rebord 4 (ou le deuxième rebord 6 selon la goulotte 16 concernée) et aussi la languette 28 qui est conçue pour pivoter élastiquement autour de son bord la rattachant au fond 2. Cette distance (entre la languette 28 et une arête 22) peut être d'environ la moitié du diamètre du fil de trame, soit par exemple comprise entre 2,5 mm et 3,0 mm.

Enfin, pour qu'un fil de trame 32 puisse venir prendre place au fond d'une goulotte 16, il convient de lui ménager aussi assez de place. Il convient alors d'adapter la largueur de la languette 28 (distance entre ses deux bords latéraux) de manière à ce qu'un fil de trame 32 puisse loger entre le fond d'une goulotte 16 et ladite languette 28. Une forme de réalisation avantageuse de la présente invention prévoit que la distance entre le fond d'une goulotte 16 et un bord latéral dé la languette 28 soit juste inférieure au diamètre du fil de trame 32 destiné à loger dans la goulotte 16. À titre d'exemple, cette distance sera par exemple cotée à 4,9 mm pour un diamètre de fil nominal de 5 mm. Ainsi, un fil de trame 32 introduit dans la goulotte 16 sera parfaitement maintenu dans celle-ci grâce à l'élasticité du premier rebord 4 (ou du deuxième rebord 6) même pour un fil de trame 32 dont le diamètre serait dans la fourchette basse des tolérances.

Les figures 3 à 5 illustrent un accessoire d'angle selon l'invention monté sur un tronçon de chemin de câbles. Dans cette position montée, chaque goulotte 16 reçoit un fil de trame 32 et le fil de rive 30' du bord latéral 36 se trouvant du côté concave de la courbure faite par le tronçon de chemin de câbles est introduit entre les bords supérieurs du premier rebord 4 et du deuxième rebord 6 et le troisième rebord 8.

On remarque que le fond 2 est orienté vers l'intérieur du chemin de câbles et s'étend ainsi parallèlement au bord latéral 36 correspondant du tronçon de chemin de câbles. De la sorte, l'accessoire d'angle n'est pas agressif vis-à-vis des câbles (ou similaires) disposés à l'intérieur du chemin de câbles.

La hauteur du premier rebord 4 et du deuxième rebord 6 est adaptée à la distance séparant le fil de rive 30' de son fil de chaîne 30 voisin. Bien entendu, cette hauteur sera inférieure à cette distance de séparation.

Pour aligner en hauteur les deux fils de trame 32 reliés par un accessoire d'angle, il est proposé, avec un accessoire d'angle tel que décrit ci-dessus, d'utiliser le troisième rebord 8 en coopération avec le premier rebord 4 et le deuxième rebord 6. La distance séparant la visière 24 du troisième rebord 8 des bords supérieurs du premier rebord 4 et du deuxième rebord 6 étant adaptée au diamètre du fil de rive 30', on réalise ici une rainure de guidage qui contribue à garantir l'alignement au niveau du fil de rive 30' et donc plus généralement au niveau des fils de chaîne 30. De la sorte, deux fils de trame 32 sont maintenus en vis-à-vis et les parties du panneau de fond 34 restent dans un même plan (horizontal).

La présence du troisième rebord 8 permet aussi de réaliser une protection à la fois pour les câbles ou similaires dans le chemin de câbles et vis-à-vis d'un utilisateur. En effet, comme mentionné, l'accessoire d'angle se trouve au niveau de fils de trame 32 entre lesquels des tronçons de fils de chaîne ont été coupés. Cette coupure peut laisser apparaître des arêtes agressives et le troisième rebord 8 réalise une protection contre les risques de coupures dus à ces arêtes. Grâce à ce troisième rebord 8, une protection des câbles, notamment lors de leur tirage dans le chemin de câbles et de l'utilisateur (lors du montage mais aussi ultérieurement pour tout utilisateur) est ainsi réalisée efficacement.

Les figures 6 et 7 illustrent des étapes de montage d'un accessoire d'angle selon la présente invention sur un tronçon de chemin de câbles. On suppose ici qu'il s'agit d'un tronçon de chemin de câbles dont des fils de chaîne ont été coupés pour former un virage dans le chemin de câbles correspondant.

La figure 6A illustre une première étape de montage. Les deux branches latérales des fils de trame 32 à relier sont rapprochées l'une de l'autre par un opérateur. Un accessoire d'angle selon l'invention, tel par exemple l'accessoire d'angle décrit plus haut, est alors introduit à l'intérieur du chemin de câbles correspondant. Le fil de rive 30' correspondant est introduit sous le troisième rebord 8 de l'accessoire d'angle et un premier fil de trame 32 est positionné face à une bande d'extrémité 18. L'accessoire d'angle est alors pivoté autour de ce premier fil de trame 32 de manière à faire passer l'autre fil de trame 32 entre les bandes d'extrémité 18 et venir faire reposer le second fil de trame 32 sur la face intérieure concave de la seconde bande d'extrémité 18. La figure 6B illustre en vue de dessous le positionnement des fils de trame 32 dans l'accessoire d'angle. Ces fils reposent entre la languette 28 et les bandes d'extrémité 18. La distance entre l'extrémité libre d'une bande d'extrémité 18 et la languette 28 est choisie de telle sorte qu'un espace suffisant soit laissé pour loger un fil de trame. On peut toutefois prévoir ici un léger serrage du fil de trame 32 dans la position représentée sur la figure 6B. Au repos (c'est-à-dire sans déformation élastique), la distance entre l'extrémité d'une bande d'extrémité 18 au niveau de sa face orientée vers le fond 2, et la languette 28 est alors légèrement inférieure (5% par exemple) au diamètre du fil de trame. On a par exemple une cote nominale de 4,8 mm pour cette distance lorsque la cote nominale du diamètre du fil est de 5 mm.

La position des fils de trame 32 dans l'accessoire d'angle illustrée sur les figures 6A et 6B est une position de prémontage qui permet de maintenir le tronçon de chemin de câbles plié. Cette position est facile à obtenir et ne nécessite pas beaucoup d'effort de la part de l'utilisateur.

Pour obtenir la position de montage illustrée sur les figures 3 à 5, il convient de faire passer les fils de trame 32 de la position illustrée sur la figure 6A à celle illustrée sur la figure 7A. Il est alors proposé d'exercer sur les fils de trame 32 une traction longitudinale -par rapport à la direction du chemin de câbles-, simultanément sur les deux fils de trame 32. L'accessoire d'angle se déforme alors élastiquement pour faire passer les fils de trame 32 entre la languette 28 et l'arête 22 correspondante. La déformation a essentiellement lieu au niveau de chaque goulotte 16 qui s'ouvre et s'écarte et/ou de la languette 28 qui se rabat vers le fond 2.

En position de montage finale, les fils de trame 32 sont logés chacun dans une goulotte 16, comme illustré sur la figure 7B. Les fils de trame 32 sont alors verrouillés. Ils reposent contre le fond de leur goulotte 16 et contre la languette 28 et la sortie hors de ce logement est fermée par le passage étroit entre la languette 28 et l'arête 22.

On remarque qu'en poussant les fils de trame 32 l'un vers l'autre, il n'est pas possible de faire ressortir les fils de trame 32 de leur logement. Lors de l'introduction des fils de trame 32, avant celle-ci, les fils reposaient sur la languette 28, au niveau du bord libre de celle-ci. En tirant longitudinalement sur les fils de trame 32 pour les écarter l'un de l'autre comme illustré sur la figure 7A et les faire ainsi pénétrer dans leur logement de montage en passant le passage étroit entre la languette 28 et l'arête 22 correspondante, le fil de trame 32 exerce sur la languette 28 une force avec une composante perpendiculaire au bord sur lequel il est en appui. Ici, le fil de trame 32 vient donc repousser la languette 28 vers l'intérieur de la découpe dont elle est issue et agrandir le passage jusqu'à obtenir une largeur suffisante pour introduire le fil de trame 32 dans sa goulotte 16 (il y a également, comme déjà évoqué, une déformation de la goulotte par action du fil de trame sur l'arête correspondante). Par contre, si une force est exercée sur le fil de trame 32 lorsque celui-ci est dans sa goulotte 16 pour essayer de le faire sortir de celle-ci, la composante de la force sur la languette 28 sera sensiblement parallèle au fond 2 et ne permettra donc pas à la languette 28 de se déplacer vers le fond 2. La languette 28, du fait de sa configuration, assure donc un verrouillage des fils de trame 32 dans les goulottes 16.

Pour permettre le démontage de l'accessoire d'angle, il convient d'agir sur la languette 28 pour la ramener au moins partiellement vers le fond 2. C'est à cet effet qu'est prévue la fente 29 dans la languette 28. En introduisant une extrémité de tournevis dans cette fente 29, il est possible de rabattre la languette 28 vers le fond 2 et ainsi d'ouvrir, au moins partiellement, le passage de sortie pour les fils de trame 32 logés dans les goulottes 16.

La présente invention permet ainsi de réaliser facilement le montage d'un accessoire d'angle sur un tronçon de chemin de câbles. Le montage alors réalisé garantit un bon alignement entre les deux parties de tronçon reliées. Enfin, la liaison effectuée protège à la fois les câbles dans le chemin de câbles, le monteur qui met en place l'accessoire d'angle et tout utilisateur ultérieur, de toutes les arêtes vives que l'on peut trouver suite aux découpes, généralement à la cisaille, faites au niveau de la liaison réalisée par l'accessoire d'angle.

La présente invention ne se limite pas à la forme de réalisation préférée décrite ci-dessus à titre d'exemple non limitatif et représentée sur les dessins. Elle concerne toutes les variantes de réalisation à la portée de l'homme du métier dans le cadre des revendications ci-après.

## Revendications

1. Dispositif de liaison pour deux fils transversaux (32) de chemin de câbles en fils présentant des fils longitudinaux (30, 30') et des fils transversaux (32), ledit dispositif de liaison comportant :
- un fond (2) sensiblement plan présentant une face avant, une face arrière, un premier bord (10) et un deuxième bord (12) parallèle au premier bord (10),
- un premier rebord (4) incurvé s'étendant à partir du premier bord (10) du fond (2) vers l'avant de celui-ci, et
- un deuxième rebord (6) incurvé s'étendant à partir du second bord (12) du fond (2) vers l'avant de celui-ci,
le premier rebord (4) et le second rebord (6) étant incurvés l'un vers l'autre de telle sorte que le premier rebord (4), le second rebord (6) et la partie du fond (2) disposée entre les deux rebords présentent au moins localement une forme profilée en C, chaque rebord définissant un logement destiné à recevoir un fil transversal (32),
**caractérisé en ce que** le premier rebord (4) et le second rebord (6) présentent chacun une partie en forme de goulotte (16) ainsi qu'une bande d'extrémité (18) incurvée dont la concavité est orientée vers le fond (2), une arête (22) séparant la goulotte (16) de la bande d'extrémité (18) dont le rayon de courbure est sensiblement égal au rayon de courbure de la goulotte (16).

2. Dispositif de liaison selon la revendication 1, **caractérisé en ce que** le fond (2) présente une découpe sur trois côtés dont deux sont parallèles au premier bord (10) et au second bord (12) définissant ainsi une languette (28), et **en ce que** la languette (28) est repliée vers l'avant du fond (2) en formant avec celui-ci un angle aigu, le pliage étant réalisé par rapport à un quatrième côté qui est parallèle au troisième bord (14) du fond (2).

3. Dispositif de liaison selon la revendication 2, **caractérisé en ce que** la distance séparant un bord latéral de la languette (28), adjacent au quatrième côté de pliage, du fond (2) du rebord lui faisant face est de 5 mm ± 0,2.

4. Dispositif de liaison selon l'une des revendications 2 ou 3, **caractérisé en ce qu'**une fente (29) destinée à recevoir l'extrémité d'un tournevis plat est réalisée dans la languette (28).

5. Dispositif de liaison selon les revendications 2 à 4, **caractérisé en ce que** la distance entre l'arête (22) séparant la goulotte (16) de la bande d'extrémité (18) de la languette (28) est inférieure au double du rayon de courbure de la goulotte (16).

6. Dispositif de liaison selon l'une des revendications 1 à 5, **caractérisé en ce que** le rayon de courbure de la goulotte (16) et de la bande d'extrémité (18) est de 2,5 mm ± 0,1.

7. Tronçon de chemin de câbles comportant des fils longitudinaux (30, 30') soudés à des fils transversaux (32) en forme de U formant ainsi un canal avec un fond disposé entre deux bords latéraux, les fils longitudinaux (30, 30') dudit tronçon de chemin de câbles étant sectionnés entre deux fils transversaux (32) successifs au niveau du fond et d'un premier bord latéral du tronçon de chemin de câbles de manière à permettre le pliage de ce dernier, **caractérisé en ce que** lesdits deux fils transversaux (32) sont reliés l'un à l'autre par un dispositif de liaison selon l'une des revendications 1 à 6.

8. Tronçon de chemin de câbles selon la revendication 7, **caractérisé en ce que** la face arrière du fond (2) du dispositif de liaison est orientée vers l'intérieur du tronçon de chemin de câbles.

## Patentansprüche

1. Verbindungsvorrichtung für zwei Querdrähte (32) einer Gitterkabelrinne, die Längsdrähte (30, 30') und Querdrähte (32) aufweist, wobei die Verbindungsvorrichtung umfasst:
- einen im Wesentlichen ebenen Boden (2) mit einer Vorderseite, einer Rückseite, einem ersten Rand (10) und einem zum ersten Rand (10) parallelen zweiten Rand (12),
- eine erste gebogene Randleiste (4), die sich vom ersten Rand (10) des Bodens (2) aus zu dessen Vorderseite erstreckt, und
- eine zweite gebogene Randleiste (6), die sich vom zweiten Rand (12) des Bodens (2) aus zu dessen Vorderseite erstreckt,
wobei die erste Randleiste (4) und die zweite Randleiste (6) zueinander derart gebogen sind, dass die erste Randleiste (4), die zweite Randleiste (6) und der zwischen den beiden Randleisten angeordnete Teil des Bodens (2) wenigstens stellenweise ein C-förmiges Profil aufweisen, wobei jede Randleiste eine zur Aufnahme eines Querdrahts (32) bestimmte Aufnahme bildet,
**dadurch gekennzeichnet, dass** die erste Randleiste (4) und die zweite Randleiste (6) jeweils einen Teil in Form einer Rinne (16) sowie einen gebogenen Endstreifen (18) aufweisen, dessen Konkavität zum Boden (2) gerichtet ist, wobei eine Kante (22) die Rinne (16) von dem Endstreifen (18) trennt, dessen Krümmungsradius im Wesentlichen dem Krümmungsradius der Rinne (16) entspricht.

2. Verbindungsvorrichtung nach Anspruch 1,
**dadurch gekennzeichnet, dass** der Boden (2) an drei Seiten einen Einschnitt aufweist, von denen zwei zum ersten Rand (10) und zum zweiten Rand (12) parallel sind und somit eine Zunge (28) bilden, und dass die Zunge (28) zur Vorderseite des Bodens (2) gebogen ist und dabei mit diesem einen spitzen Winkel bildet, wobei die Biegung bezüglich einer vierten Seite ausgeführt ist, die zum dritten Rand (14) des Bodens (2) parallel ist.

3. Verbindungsvorrichtung nach Anspruch 2,
**dadurch gekennzeichnet, dass** der Abstand zwischen einem an die vierte Seite der Biegung angrenzenden Seitenrand der Zunge (28) und dem Boden (2) der dieser gegenüberliegenden Randleiste 5 mm ± 0,2 beträgt.

4. Verbindungsvorrichtung nach einem der Ansprüche 2 oder 3,
**dadurch gekennzeichnet, dass** ein zur Aufnahme des Endes eines Schlitzschraubendrehers bestimmter Spalt (29) in der Zunge (28) ausgeführt ist.

5. Verbindungsvorrichtung nach den Ansprüchen 2 bis 4,
**dadurch gekennzeichnet, dass** der Abstand zwischen der Kante (22), die die Rinne (16) des Endstreifens (18) von der Zunge (28) trennt, kleiner als der zweifache Krümmungsradius der Rinne (16) ist.

6. Verbindungsvorrichtung nach einem der Ansprüche 1 bis 5,
**dadurch gekennzeichnet, dass** der Krümmungsradius der Rinne (16) und des Endstreifens (18) 2,5 mm ± 0,1 beträgt.

7. Abschnitt einer Kabelrinne mit Längsdrähten (30, 30'), die an U-förmige Querdrähte (32) geschweißt sind und somit einen Kanal mit einem zwischen zwei Seitenrändern angeordneten Boden bilden, wobei die Längsdrähte (30, 30') des Kabelrinnenabschnitts zwischen zwei aufeinanderfolgenden Querdrähten (32) in Höhe des Bodens und eines ersten Seitenrands des Kabelrinnenabschnitts solchermaßen abgetrennt sind, dass dessen Biegen möglich ist,
**dadurch gekennzeichnet, dass** die beiden Querdrähte (32) miteinander durch eine Verbindungsvorrichtung nach einem der Ansprüche 1 bis 6 verbunden sind.

8. Kabelrinnenabschnitt nach Anspruch 7,
**dadurch gekennzeichnet, dass** die Rückseite des Bodens (2) der Verbindungsvorrichtung zur Innenseite des Kabelrinnenabschnitts gerichtet ist.

## Claims

1. Linking device for two transverse wires (32) of a cable tray of wires having longitudinal wires (30, 30') and transverse wires (32), said linking device comprising:
- a substantially planar base (2) having a front face, a rear face, a first edge (10) and a second edge (12) which is parallel to the first edge (10),
- a first curved flange (4) extending from the first edge (10) of the base (2) towards the front thereof, and
- a second curved flange (6) extending from the second edge (12) of the base (2) towards the front thereof,
the first flange (4) and the second flange (6) being curved towards one another such that the first flange (4), the second flange (6) and the portion of the base (2) arranged between the two flanges have, at least locally, a C-shaped profile, each flange defining a recess intended to receive a transverse wire (32), **characterized in that** the first flange (4) and the second flange (6) each have a portion in the shape of a trough (16) and a curved end strip (18), the concave part of which is oriented towards the base (2), a ridge (22) separating the trough (16) from the end strip (18), the radius of curvature of which is substantially equal to the radius of curvature of the trough (16).

2. Linking device according to claim 1, **characterized in that** the base (2) has a cut-out on three sides, two of which are parallel to the first edge (10) and to the second edge (12), thus defining a tongue (28), and **in that** the tongue (28) is folded forward of the base (2) forming an acute angle thereto, the folding being carried out relative to a fourth side which is parallel to the third edge (14) of the base (2).

3. Linking device according to claim 2, **characterized in that** the distance separating a lateral edge of the tongue (28), which is adjacent to the fourth folding side, of the base (2) of the flange facing it is 5 mm ± 0.2.

4. Linking device according to either claim 2 or claim 3, **characterized in that** a slot (29) intended to receive the end of a flat screwdriver is made in the tongue (28).

5. Linking device according to claims 2 to 4, **characterized in that** the distance between the ridge (22) separating the trough (16) from the end strip (18) of the tongue (28) is less than twice the radius of curvature of the trough (16).

6. Linking device according to any of claims 1 to 5, **characterized in that** the radius of curvature of the trough (16) and of the end strip (18) is 2.5 mm ± 0.1.

7. Cable tray portion comprising longitudinal wires (30, 30') welded to transverse wires (32) in the shape of a U thus forming a channel with a bottom arranged between two lateral edges, the longitudinal wires (30, 30') of said cable tray portion being cut between two successive transverse wires (32) at the bottom and at a first lateral edge of the cable tray portion so as to allow the folding of said cable tray portion, **characterized in that** said two transverse wires (32) are connected to each other by a linking device according to any of claims 1 to 6.

8. Cable tray portion according to claim 7, **characterized in that** the rear face of the base (2) of the linking device is oriented towards the inside of the cable tray portion.
